# EUROPÄISCHE PATENTSCHRIFT

(11) **EP 0 762 001 B1**
(45) Veröffentlichungstag und Bekanntmachung des Hinweises auf die Patenterteilung: **20.12.2000**
(21) Anmeldenummer: 96112090.4
(22) Anmeldetag: 26.07.1996
(51) Int. Cl.: F16D 3/76, F16D 3/58

(54) **Elastische Wellenkupplung**
Elastic shaft coupling
Accouplement élastique d'arbres

(30) Priorität: 29.08.1995 DE 19531846
(43) Veröffentlichungstag der Anmeldung: 12.03.1997
(73) Patentinhaber: CENTA-ANTRIEBE KIRSCHEY GmbH, D-42781 Haan (DE)
(72) Erfinder: Kirschey, Gerhard, Dipl.-Ing., 42329 Wuppertal (DE)
(74) Vertreter: Patentanwälte Ostriga & Sonnet

(56) Entgegenhaltungen:
- DE-A- 3 049 109
- DE-A- 3 518 923
- DE-B- 1 044 637
- DE-C- 865 711
- FR-A- 2 229 887
- GB-A- 579 226

## Beschreibung

Die Erfindung bezieht sich auf eine elastische Wellenkupplung nach dem Oberbegriff des Anspruchs 1 und geht damit aus von der sog. 'CFW Doppelkonus-Kupplung' der Firma Carl Freudenberg in Weinheim.

Diese bekannte Kupplung besteht aus drei konzentrisch angeordneten konischen sowie mit Flanschen versehenen Metallteilen, zwischen denen das Gummi der elastischen Ringe fest einvulkanisiert ist. Das innere und das äußere Metallteil sind unter Zwischenlage der Ringscheibe als Zwischenflansch am Antriebsflansch befestigt. Das mittlere Metallteil bildet die andere Kupplungshälfte und dient direkt als Abtriebsflansch. Bei der Montage der Kupplung wird mit einer zentralen Mutter der innere Konus auf dem Zwischenflansch festgezogen und somit durch die axiale Bewegung der beiden Gummischichten vorgespannt. Das Drehmoment wird mit Hilfe mehrerer Stifte auf den inneren Konus übertragen. Entwickelt wurde die Kupplung vor allem zur Dämpfung von Drehschwingungen. In radialer und axialer Richtung ist die Kupplung hingegen sehr hart.

Eine weitere gattungsgemäße elastische Wellenkupplung gemäß dem Oberbegriff des Anspruchs 1 ist aus der DE-C-865 711 bekannt. Auch hier werden die Zwischenlagen aus Gummi durch eine axiale Verschiebung der inneren gegenüber der äußeren Hülse vorgespannt.

Der Erfindung liegt ausgehend von dem eingangs genannten Stand der Technik die Aufgabe zugrunde, eine drehelastische Kupplung der vorausgesetzten Gattung zu schaffen, die axial weniger hart ist, und die sich ferner durch vereinfachte Bauteile auszeichnet sowie leicht zu montieren ist und im Schadensfall ohne Spezialwerkzeuge repariert werden kann.

Die Erfindung löst diese Aufgabe mit den Merkmalen des Anspruchs 1 und ist dem entsprechend dadurch gekennzeichnet, daß die elastischen Kupplungskörper mit den an ihnen angehafteten Metallteilen kreissegmentförmige Baugruppen (Kupplungssegmente) ausbilden, daß die Haftungsflächen aller Metallteile achsparallel ausgerichtet sind, daß die Ringscheibe als Tragplatte für alle Segmente einer Kupplung und als Adapterflansch zum direkten Anschluß der Kupplung an ein Maschinenteil wie Motor-Schwungscheibe ausgebildet ist und daß die außen liegenden Metallteile unter ausschließlich radialer Kompression der elastischen Kupplungskörper vorgespannt an einer Montageplatte befestigt sind, die lösbar mit dem Adapterflansch verbindbar ist.

Es ergibt sich dadurch eine zweischnittige Kupplung ohne Axialkraftkomponente zwischen den parallel geschalteten elastischen Kupplungskörpern mit verbesserter Axialelastizität. Ihre besondere Eignung findet die Kupplung z.B. bei Generatorantrieben, bei denen die Achsen der Maschinenteile in der Regel fluchtend ausgerichtet sind, wo aber vor allem durch Temperatureinflüsse hervorgerufene Axialverlagerungen elastisch auszugleichen sind. Wegen der nicht erforderlichen axialen Verspannung der Kupplungsteile kann die Kupplung aus simpleren Bauteilen bestehen und deshalb einen insgesamt einfacheren und kompakteren Aufbau aufweisen. Hervorzuheben ist neben der Segmentbauweise, die zwar für sich betrachtet vor allem bei sehr großen Kupplungen z.B. für Schiffsantriebe grundsätzlich bekannt ist, der durch die Montageplatte erzielte besondere Vorteil vereinfachter, bausatzartiger Fertigungs- und Montagemöglichkeit. Die Montageplatte ist praktisch das 'Chassis' eines jeden radial vorgespannten Kupplungssegments, welches deshalb überaus leicht zu handhaben ist. Sogar der Anwender selbst ist in die Lage versetzt, ein etwa schadhaftes Kupplungssegment ohne besonderen Aufwand gegen ein entsprechendes Ersatzteil austauschen zu können.

Die achsparallele Ausrichtung der Vulkanisationshaftflächen ist, abgesehen von weiterhin vereinfachter Herstellbarkeit (es sind schlichte Blech- statt Gußteile möglich), ebenfalls eine wichtige Voraussetzung für die Möglichkeit der rein radialen Kompression der elastischen Kupplungskörper zur Erzielung radialer Vorspannung der elastischen Kupplungskörper, die vor allem die Vulkanisationshaftung unterstützt und der Kupplung eine höhere Dämpfung verleiht. Auch die Ausgestaltung der Ringscheibe als Adapterflansch trägt wesentlich zur Vereinfachung vor allem der Montage der Kupplung insgesamt am Aggregat bei.

Es ist zwar z.B. aus der über sechzig Jahre alten Reichspatentschrift 680 988 bereits eine mehrschnittige Kupplung mit parallel geschalteten elastischen Kupplungskörpern in Ringform bekannt, doch können diese wegen der im Querschnitt U-förmig ausgebildeten Metallbügel nicht radial vorgespannt werden. Außerdem sind die elastischen Körper und die Metallteile nicht segmentiert. Die U-Form der Metallbügel macht im übrigen eine Vulkanisation äußerst problematisch, wohingegen die Kupplungssegmente beim Gegenstand der Erfindung ohne weiteres 'hinten offen' sein können und sich problemlos vulkanisieren lassen.

Aus der FR-A-2 229 887 ist eine nicht gattungsgemäße Kupplung bekannt. Hier ist zwischen Antriebs- und Abtriebsseite der Kupplung eine Zwillingsanordnung von Kupplungselementen vorgesehen. Zwischen der Antriebs- und der Abtriebsseite der Kupplung ist ein Abschnitt eines Rohres angeordnet, an dem jeweils innen und außenseitig elastische Körper angeordnet sind. Die elastischen Kupplungskörper sind zwar in Umfangsrichtung unterbrochen, bilden jedoch nicht mit den an ihnen angehafteten Metallteilen kreissegmentförmige Baugruppen. Um hier einen Wechsel der elastischen Elemente vornehmen zu können, muß die gesamte Kupplung zwischen Antriebs- und Abtriebsseite einschließlich des Rohrabschnitts gelöst werden. Eine werksseitige radiale Kompression der elastischen Elemente ist hier aus konstruktionstechnischen Gründen nicht möglich.

Ein weiterer Aspekt der Erfindung im Interesse vereinfachter Montage ist ein baukastenmäßiger Aufbau von Kupplungen unterschiedlicher Leistungsfähigkeit mit gleichen Kupplungssegmenten, womit ein gewisses Leistungsspektrum abgedeckt werden kann, bevor zur Leistungserhöhung Kupplungssegmente der folgenden Baugröße zum Einsatz gelangen.

Hierzu sieht die Erfindung einander identische Kupplungssegmente vor, die in unterschiedlicher Anzahl und unterschiedlichem Umfangsabstand voneinander bei zur Systemachse und bezüglich der Umfangsabstände symmetrischer Anordnung Kupplungen unterschiedlicher Nennleistung bzw. Belastbarkeit ergeben. Folgende Beispiele sollen dies erläutern.

Eine erste Kupplung für eine bestimmte Nennleistung weist z.B. fünf auf einem gemeinsamen Teilkreis liegende, also konzentrisch angeordnete, und regelmäßig über den Umfang verteilte Kupplungssegmente auf. Mit denselben Kupplungssegmenten und bei gleicher Kupplungs-Baugröße können, quasi nach dem Baukastenprinzip, Kupplungen für geringere Anforderungen an die Leistungsübertragung mit vier oder drei (statt fünf) solcher und wiederum gleichermaßen auf demselben Teilkreis (konzentrisch) angeordneter Kupplungssegmente aufgebaut werden.

Hiervon ausgehend können weitere Leistungsvarianten dadurch geschaffen werden, daß man die Kupplungssegmente nach innen versetzt, also weiter zum Systemzentrum hin rückt. Eine solche Kupplung hat vor allem den Vorteil besonders kompakter Bauform. Zwar liegen dann die Kupplungssegmente und ihre Anschlußbohrungen nicht mehr auf einem einheitlichen und genau definierten Teilkreis, doch lassen es moderne Fertigungsmethoden ohne weiteres zu, die Lochbilder der Anschlußelemente nach Vorgabe der Kupplungssegmentanordnungen anzupassen.

In ähnlicher Weise, d.h. mit ebenfalls nicht teilkreiskonformer Anordnung lassen sich (wenn man vom Anfangsbeispiel mit fünf Kupplungssegmente ausgeht) Kupplungen mit sechs oder mehr Kupplungssegmenten bauen, die, damit sie den notwendigen Umfangsabstand voneinander aufweisen, um jeweils dasselbe Maß radial nach außen versetzt werden.

Es hat sich erstaunlicherweise gezeigt, daß mit einer 'starken' Version (z.B. sechs nach außen versetzte Kupplungssegmente) und einer 'schwächeren' Version (z.B. vier nach innen versetzte Kupplungssegmente) und den dazwischen liegenden Leistungsvarianten bei Verwendung absolut identischer, lediglich anders angeordneter Kupplungssegmente ein Leistungsspektrum im Verhältnis von 2:1 abgedeckt werden kann.

Weitere Merkmale und vorteilhafte Ausgestaltungen der Erfindung sind in den sonstigen Unteransprüchen angegeben. Sie ergeben sich auch aus der nachfolgenden detaillierten Erläuterung der Erfindung anhand von in den Zeichnungen dargestellter Ausführungsbeispiele. Es zeigen:
Fig. 1 einen Halblängsschnitt durch eine Wellenkupplung nach einer mit an einer Montageplatte montierten radial vorgespannten Kupplungssegmenten,
Fig. 2 eine Stirnansicht auf die Kupplung nach Fig. 1, wobei fünf Kupplungssegemente eingesetzt sind,
Fig. 3 eine Stirnansicht auf eine Kupplung, die eine Anordnung mit vier, in Umfangsrichtung weiter voneinander beabstandeten Kupplungssegmenten zeigt, und
Fig. 4 eine Stirnansicht auf eine Kupplung mit sechs Kupplungssegmenten, die mit denen in den Fig. 2 und 3 gezeigten identisch sind, deren Krümmungsmittelpunkte jedoch von der Systemachse weiter nach außen gerückt sind.

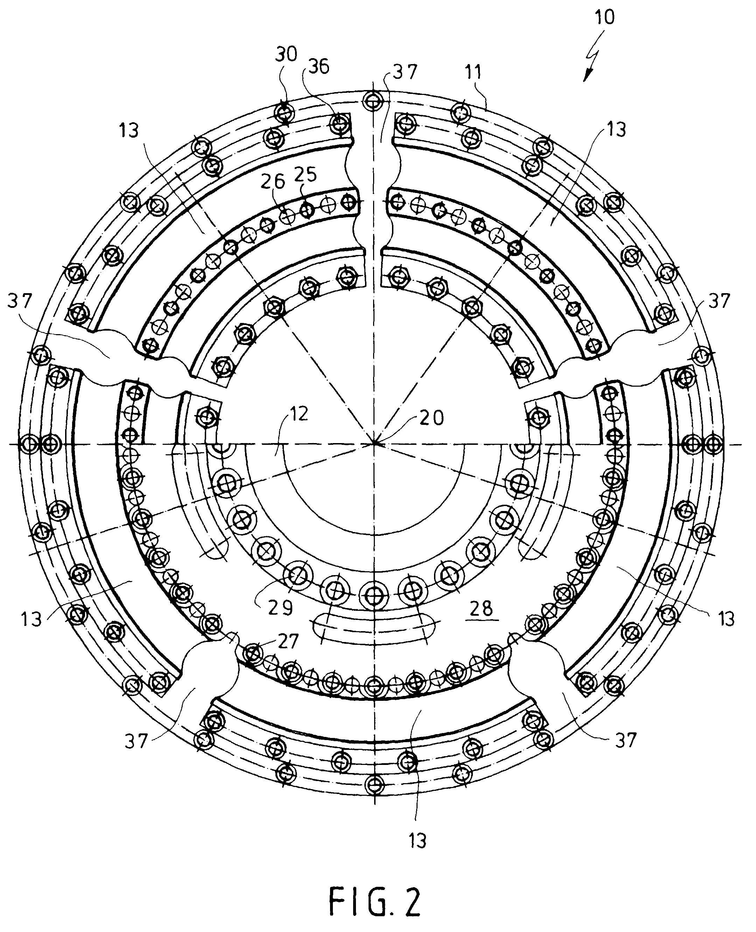

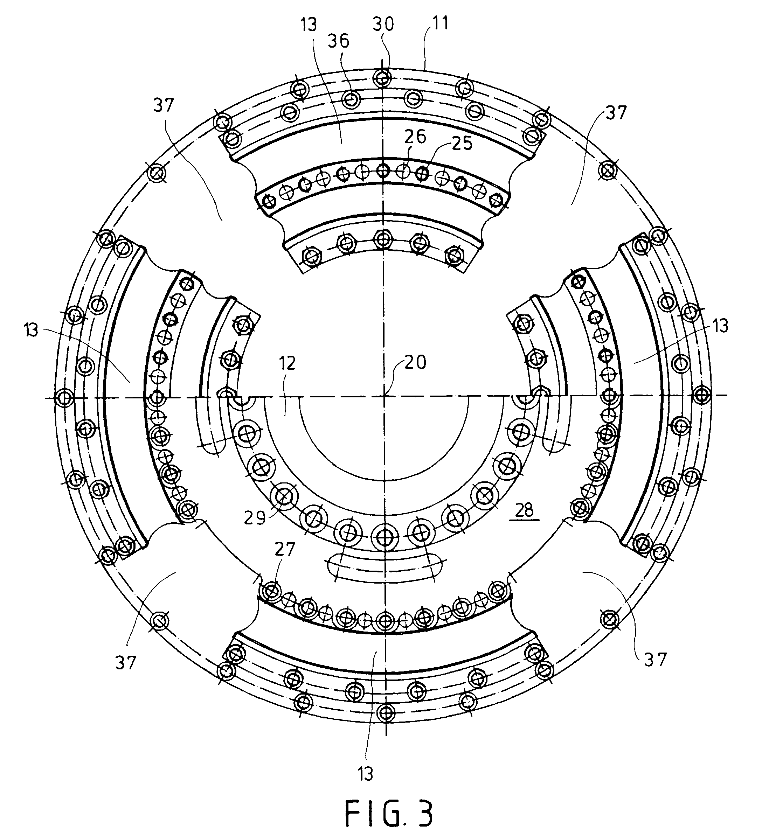

Die Fig. 2 und 3 zeigen jeweils zur Hälfte eine Ansicht mit und eine Ansicht ohne Nabe und den daran angeschlossenen Verbindungsring.

Eine insgesamt mit 10 bezeichnete Wellenkupplung zur dreh- und auch axialelastischen Verbindung zweier Maschinenelemente wie z.B. eines antreibenden Schwungrads 11 eines Dieselmotors mit der abtriebsseitigen Nabe 12 einer Generatorwelle umfaßt mehrere untereinander identische Kupplungssegmente 13, die antriebsseitig an einer Ringscheibe befestigt sind, die als Adapterflansch 14 zum Anschrauben an den Schwungradflansch 11 ausgebildet ist. Unter Adapterflansch im Sinne der Erfindung wird die alle Kupplungssegmente 13 tragende und an das Anschlußlochbild der Schwungscheibe 11 angepaßte Ringscheibe verstanden.

Jedes Kupplungssegment 13 umfaßt - jeweils in Form von Kreissegmenten - zwei elastische Kupplungskörper 15 und 16, ein inneres metallisches Kupplungsteil 17 und ein ebenfalls am Adapterflansch 14 anzubringendes äußeres metallisches Kupplungsteil 18 sowie ein zentrales metallisches Kupplungsteil 19, das der anderen Kupplungshälfte, hier der Abtriebsseite, zugeordnet ist.

Der innere Kupplungskörper 15 ist mit seiner zur Systemachse 20 weisenden Innenumfangsfläche 21 mit dem inneren Metallteil 17, der äußere Kupplungskörper 16 ist mit seiner von der Systemachse 20 weg weisenden Außenumfangsfläche 22 und beide Kupplungskörper 15, 16 sind mit ihren zueinander weisenden Umfangsflächen 23, 24 gemeinsam an das zentrale metallische Kupplungsteil 19 mittels Vulkanisation angehaftet.

Wie aus den Zeichnungen ersichtlich ist, sind die beiden elastischen Kupplungskörper 15 und 16 eines Kupplungssegments 13 konzentrisch und mit axialer Überdeckung zueinander angeordnet. Da die beiden Kupplungskörper 15 und 16 jeweils antriebs- und abtriebsseitig befestigt sind, entsteht eine zweischnittige Kupplung mit parallel geschalteten Kupplungskörpern 15, 16 und folglich eine elastische Wellenkupplung hoher Leistungsdichte.

Während die beiden metallischen Kupplungsteile 17 und 18 aus recht einfachen, biegeverformten Blechen bestehen, ist bei dem zentralen Kupplungsteil 19 aus Gründen möglichst geringer Masse daran gedacht, es als Leichtmetallteil auszulegen. Das Biegen der Blechsegmente 17 und 18 führt zu den beiden mit 17a und 18a bezeichneten Anschraubflanschen. Das zentrale metallische Kupplungsteil 19 weist in Umfangsrichtung abwechselnd Gewindesacklöcher 25 und Lüftungs-Durchgangsbohrungen 26 auf (s. z.B. Fig. 2). Die Gewindesacklöcher 25 sind zur Aufnahme von Befestigungsschrauben 27 für einen Verbindungsring 28 bestimmt, der seinerseits über weitere Schrauben 29 an der Nabe 12 angebracht ist.

Dadurch, daß die Haftungsflächen 21 bis 24, vor allem die den Kupplungsteilen 17 und 18 zugeordneten Haftungsflächen 21 und 22 sich zueinander und zur Systemachse 20 parallel erstrecken, und dadurch, daß jedes Kupplungsteil 17, 18 mit einem eigenen Anschraubflansch 17a, 18a versehen ist, die voneinander weg nach außen weisen, entsteht eine geometrisch sehr einfache Bauweise mit zahlreichen Vorteilen, von denen ein besonders wesentlicher in einer auf besonders einfache Weise ausführbaren radialen Kompression der elastischen Kupplungskörper besteht, um diesen eine dauernde Radialvorspannung aufzuprägen.

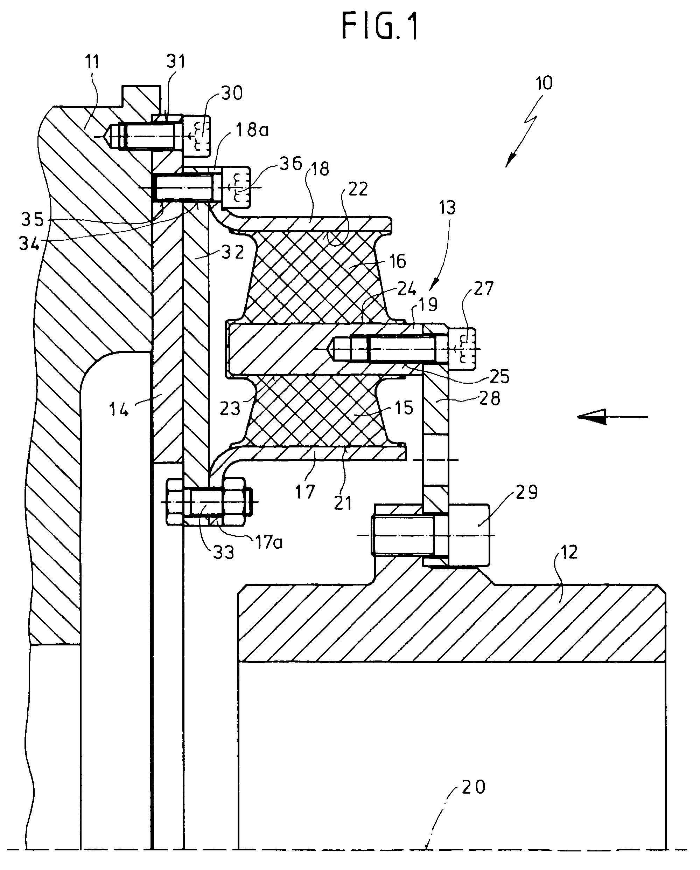

Die erfindungsgemäße Ausführungsform nach Fig. 1 trägt dem Wunsch Rechnung, im Schadensfall direkt beim Kunden oder durch ihn selbst ein Kupplungssegment montieren oder auswechseln zu können. Deshalb ist hier eine besondere Montageplatte 32 vorgesehen, auf der jedes Kupplungssegment 13 aufbaut und die die elastischen Kupplungskörper in ihrer einmal erzeugten Radialvorspannung hält.

Das innere Kupplungsteil 17 und die Montageplatte 32 sind am Innenumfang vorzugsweise mittels Verschraubungen 33 aneinander befestigt. Andere Befestigungsarten wie Schweißen, Kleben, Fügen sind jedoch ebenfalls möglich. Im radial komprimierten Zustand, der werksseitig hergestellt wird, wird sodann, ebenfalls beim Kupplungshersteller, der äußere Befestigungsflansch 18a an die Montageplatte 32 angeheftet, z.B. durch Punktschweißen. Das Kupplungssegment 13 stellt nun eine ohne Verlust der radialen Vorspannung in den elastischen Kupplungskörpern 15, 16 jederzeit handhabbare feste Baugruppe dar.

Im Bereich des Befestigungsflansches 18a des äußeren Metallteils 18 befindet sich in der Montageplatte 32 eine Durchsteckbohrungen 34 für in Gewindebohrungen 35 des Adapterflansches 14 einzusetzende Schrauben 36. Da diese Verschraubung von außen gut zugänglich ist, können die auf den Montageplatten 32 aufbauenden Kupplungssegmente 13 unter Zuhilfenahme lediglich eines Schraubendrehers jederzeit bequem und problemlos montiert oder ausgewechselt werden. Eine Zugänglichkeit in situ zur inneren Verschraubung 33 bzw. anderweitigen Befestigung an dieser Stelle ist dabei nicht notwendig. Der Adapterflansch weist an seinem Außenumfang einen Kranz von Bohrungen 31 zum Durchgriff von Schrauben 30, mit denen der Adapterflansch 14 am Aggregat, wie der Schwungscheibe 11, montiert wird.

Aus dem bisher beschriebenen Aufbau eines Kupplungssegments 13 und seiner Anordnung im Kupplungssystem wird auch deutlich, daß die Montageplatte 32 das Drehmoment vom Adapterflansch 14 über die äußere, gut zugängliche Verschraubung 35/36 auf den inneren Teil 15/17 des Kupplungssegments 13 überträgt.

Fig. 2 bis 4 dienen auch der Darstellung verschiedener Kupplungen unterschiedlicher Leistungsfähigkeit, die jedoch alle mit untereinander identischen Kupplungssegmenten 13 ausgerüstet sind.

Die Kupplung nach Fig. 2 umfaßt fünf regelmäßig über den Umfang verteilt angeordnete Kupplungssegmente 13, die zwischen sich jeweils gleiche Umfangsabstände 37 aufweisen. Alle Kupplungssegmente 13 liegen auf demselben Teilkreis, dessen Mittelpunkt mit der Systemachse 20 zusammenfällt.

Die Kupplung nach Fig. 3 umfaßt nur vier Kupplungssegmente 13, die mit denen der Kupplung aus Fig. 2 in jeder Hinsicht identisch sind. Auch die konzentrische Anordnung und Umfangsverteilung der Kupplungssegmente 13 ist grundsätzlich gleich. Der Unterschied besteht darin, daß die bei der Ausführung entsprechend Fig. 2 kleinen Umfangsabstände 37 nun um soviel größer sind, wie es dem Platzbedarf in Umfangsrichtung des einen demgegenüber weggelassenen Kupplungssegments 13 entspricht. Diese Kupplung ist für eine etwas geringere Leistungsanforderung ausgelegt als die nach Fig. 2.

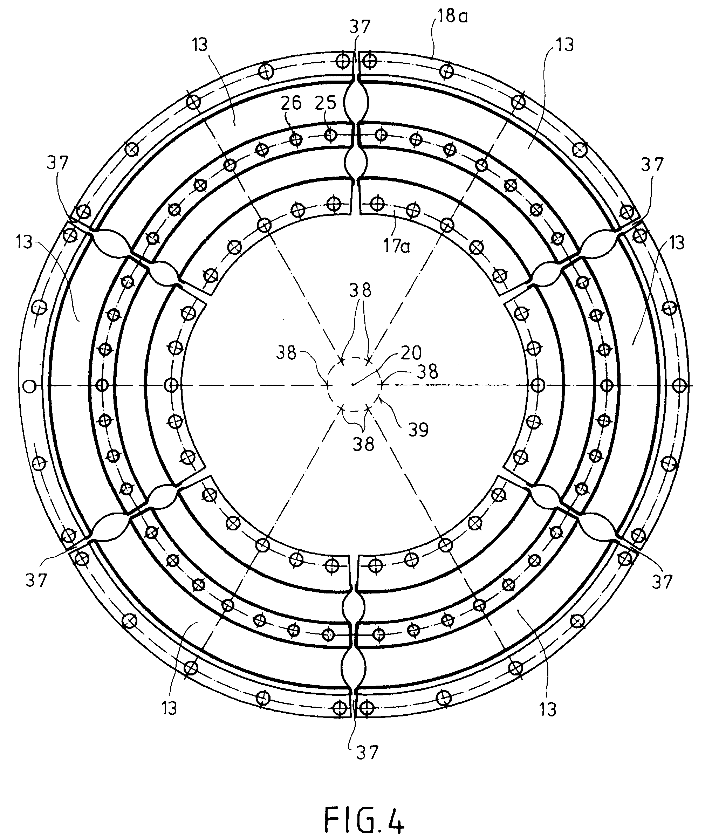

Fig. 4 ist eine Ausführungsform mit sechs Kupplungssegmenten 13 für eine Kupplung höherer Leistungsfähigkeit, jedoch nur geringfügig vergrößerter Bauform. Auch diese sechs Kupplungssegmente 13 sind mit denen der zuvor anhand der Fig. 2 und 3 beschriebenen identisch. Diese Anordnung kann man sich aus derjenigen entsprechend Fig. 2 durch nach außen Verschieben der Kupplungssegmente 13 entstanden denken, und zwar soweit, bis genügend Umfangsraum entstanden ist, um das sechste Kupplungssegment einzufügen. Da die Ausführung nach Fig. 2 mit fünf Kupplungssegmenten als 'dichteste konzentrische Packung' ausgelegt ist, können deshalb die sechs Kupplungssegmente nicht mehr auf einem gemeinsamen Teilkreis liegen. Ihre vom Systemzentrum 20 radial nach auswärts beabstandeten Krümmungsmittelpunkte 38 liegen allerdings auf einem gemeinsamen Teilkreis 39. Die Umfangsabstände 37 zwischen je zwei Kupplungssegmenten 13 sind bei dieser Ausführung, die die höchstbelastbare der drei dargestellten ist, erkennbar am geringsten.

Schließlich ist eine weitere, nicht gezeigte, aber aus dem bisher Beschriebenen ohne weiteres verständliche, wiederum mit den identischen Kupplungssegmenten ausgestattete Variante möglich. Bei ihr sind, ausgehend beispielsweise von der Bauform entsprechend Fig. 3, die dort vier Kupplungssegmente 13 radial weiter nach innen gerückt, wodurch sich eine etwas geringer belastbare, allerdings vorteilhafterweise im Umfang kleiner bauende Kupplung resultiert. Auch bei dieser Ausführung liegen, wie bei der nach Fig 4, nicht mehr die Kupplungssegmente, wohl aber deren Krümmungsmittelpunkte auf einem Teilkreis, dessen Mittelpunkt die Systemachse 20 ist.

## Patentansprüche

1. Elastische Wellenkupplung (10) mit auf unterschiedlichen Durchmessern konzentrisch zur Systemachse (20) sowie mit axialer Überdeckung angeordneten elastischen Kupplungskörpern (15, 16), mit deren zueinander weisenden innen liegenden Umfangsflächen (23, 24) ein zentrales ringförmiges Metallteil (19) der einen Kupplungshälfte und mit deren voneinander weg weisenden äußeren Umfangsflächen (21, 22) je ein außenliegendes ringförmiges Metallteil (17, 18) der anderen Kupplungshälfte durch Vulkanisation angehaftet ist, und wobei flanschartige Kupplungsabschnitte (18a) dieser beiden Metallteile an einer Ringscheibe (14) befestigt sind, dadurch gekennzeichnet, daß die elastischen Kupplungskörper (15, 16) mit den an ihnen angehafteten Metallteilen (17, 18, 19) kreissegmentförmige als Kupplungssegmente (13) ausgebildete Baugruppen formen, daß die Haftungsflächen (21, 22, 23, 24) aller Metallteile (17, 18, 19) achsparallel ausgerichtet sind, daß die Ringscheibe als Tragplatte für alle Kupplungssegmente (13) einer Kupplung (10) und als Adapterflansch (14) zum direkten Anschluß der Kupplung (10) an ein Maschinenteil wie Motor-Schwungscheibe (11) ausgebildet ist und daß die außen liegenden Metallteile (17, 18) unter ausschließlich radialer Kompression der elastischen Kupplungskörper (15, 16) vorgespannt an einer Montageplatte (32) befestigt sind, die lösbar mit dem Adapterflansch (14) verbindbar ist.

2. Wellenkupplung nach Anspruch 1, dadurch gekennzeichnet, daß das äußere Metallteil (18) an der Montageplatte angeheftet ist, insbesondere durch Schweißen, Kleben oder Nieten und das innere Metallteil (17) unter radialer Kompression der elastischen Kupplungskörper (15, 16) mit ihr verschraubt ist.

3. Wellenkupplung nach Anspruch 1, dadurch gekennzeichnet, daß sowohl das äußere Metallteil (18) als auch das innere Metallteil (17) unter radialer Kompression der elastischen Kupplungskörper (15, 16) mit der Montageplatte (32) verschraubt ist und diese einen über den Umfang der Verschraubung vorstehenden Befestigungsabschnitt mit Durchbrüchen zum Anschrauben an den Adapterflansch (14) aufweist.

4. Wellenkupplung nach einem der Ansprüche 1 bis 3, dadurch gekennzeichnet, daß die äußeren Metallteile (17, 18) aus biegeverformten Blechen bestehen.

5. Wellenkupplung nach oder einem der Ansprüche 1 bis 4, dadurch gekennzeichnet, daß das zentrale Metallteil (19) aus Leichtmetall besteht.

6. Wellenkupplung nach Anspruch 5, dadurch gekennzeichnet, daß das zentrale Metallteil (19) von axialen Lüftungskanälen (26) durchsetzt ist.

7. Wellenkupplung nach einem der Ansprüche 1 bis 6, gekennzeichnet durch einander identische Kupplungssegmente (13), die in unterschiedlicher Anzahl und unterschiedlichem Umfangsabstand (37) voneinander bei zur Systemachse (20) und bezüglich der Umfangsabstände (37) symmetrischer Anordnung Kupplungen unterschiedlicher Nennleistung ergeben.

8. Wellenkupplung nach Anspruch 7, gekennzeichnet durch eine bestimmte Anzahl n von in Umfangsrichtung dicht beabstandeten Kupplungssegmenten (13) auf einem Teilkreis, dessen Mittelpunkt mit der Systemachse (20) zusammenfällt.

9. Wellenkupplung nach Anspruch 8, gekennzeichnet durch Anordnung einer um wenigstens ein Kupplungssegment (13) verringerten Anzahl n-x von Kupplungssegmenten, die mit größerem Umfangsabstand (37) auf demselben Teilkreis angeordnet sind, auf dem die Anzahl n von Kupplungssegmenten (13) Platz finden würde.

10. Wellenkupplung nach Anspruch 9, dadurch gekennzeichnet, daß die Kupplungssegmente (13) der Anzahl n-x um eine jeweils gleiche Strecke radial in Richtung zur Systemachse (20) hin verschoben angeordnet sind, wobei ihre nicht mehr mit der Systemachse (20) zusammenfallenden Krümmungsmittelpunkte (38) auf einem zur Systemachse (20) konzentrischen Kreis (39) angeordnet sind.

11. Wellenkupplung nach Anspruch 8, gekennzeichnet durch Anordnung einer um wenigstens ein Kupplungssegment (13) vergrößerten Anzahl n+x von Kupplungssegmenten (13), die mit geringem Umfangsabstand (37) zueinander und mit von der Systemachse (20) radial nach außen versetzten Krümmungsmittelpunkten (38) angeordnet sind, wobei ihre nicht mehr mit der Systemachse (20) zusammenfallenden Krümmungsmittelpunkte (38) auf einem zur Systemachse (20) konzentrischen Kreis (39) angeordnet sind.

12. Wellenkupplung nach einem der Ansprüche 9 bis 11, gekennzeichnet durch x = 1.

## Claims

1. An elastic shaft coupling (10) with elastic coupling elements (15, 16), which are arranged at different diameters concentric to the system axis (20) and with axial overlap and to whose inner circumferential surfaces (23, 24) facing one another a central annular metal element (19) of one coupling half and to whose outer circumferential surfaces (21, 22) facing away from one another an outer annular metal element (17, 18) of the other coupling half is adhered in each case by vulcanisation, flange-like coupling sections (18a) of these two metal elements being secured to an annular disk (14), characterised in that the elastic coupling elements (15, 16) together with the metal elements (17, 18, 19) adhered thereto form circular segment-shaped subassemblies constructed as coupling segments (13), the adhesion surfaces (21, 22, 23, 24) of all metal elements (17, 18, 19) are aligned axially parallel, the annular disk is constructed as a support plate for all coupling segments (13) of a coupling (10) and as an adapter flange (14) for the direct connection of the coupling (10) to a machine element such as a motor flywheel (11) and the outer metal elements (17, 18) are secured in a prestressed manner to an assembly plate (32) exclusively with radial compression of the elastic coupling elements (15, 16), the assembly plate (32) being releasably connected to the adapter flange (14).

2. A shaft coupling according to claim 1, characterised in that the outer metal element (18) is adhered to the assembly plate, more particularly by welding, adhesion or riveting and the inner metal element (17) is screwed to the assembly plate with radial compression of the elastic coupling elements (15, 16).

3. A shaft coupling according to claim 1, characterised in that both the outer metal element (18) and the inner metal element (17) are screwed to the assembly plate (32) with radial compression of the elastic coupling elements (15, 16) and the assembly plate (32) comprises a securing section projecting beyond the circumference of the screw connection with apertures for screw connection to the adapter flange (14).

4. A shaft coupling according to one of claims 1 to 3, characterised in that the outer metal elements (17, 18) are made of metal plates deformed by bending.

5. A shaft coupling according to one of claims 1 to 4, characterised in that the central metal element (19) is made of light metal.

6. A shaft coupling according to claim 5, characterised in that the central metal element (19) is penetrated by axial ventilation ducts (26).

7. A shaft coupling according to one of claims 1 to 6, characterised by identical coupling segments (13), which in different numbers and different circumferential spacing (37) from one another with a symmetrical arrangement relative to the system axis (20) and in respect of the circumferential spacing (37) produce couplings of different nominal capacity.

8. A shaft coupling according to claim 7, characterised by a given number n of coupling segments (13) spaced closely apart in the circumferential direction on a graduated circle, whose centre point coincides with the system axis (20).

9. A shaft coupling according to claim 8, characterised by the arrangement of a number n-x of coupling segments reduced by at least one coupling segment (13), which are arranged with increased circumferential spacing (37) on the same graduated circle, on which the number n of coupling segments (13) would fit.

10. A shaft coupling according to claim 9, characterised in that the coupling segments (13) of the number n-x are arranged radially offset in the direction of the system axis (20) by an equal distance in each case, their centres of curvature (38), no longer coinciding with the system axis (20), being arranged on a circle (39) concentric to the system axis (20).

11. A shaft coupling according to claim 8, characterised by the arrangement of a number n+x of coupling segments (13) increased by at least one coupling segment (13), which are arranged with reduced circumferential spacing (37) relative to one another and with centres of curvature (38) radially offset in an outward direction relative to the system axis (20), their centres of curvature (38), no longer coinciding with the system axis (20), being arranged on a circle (39) concentric to the system axis (20).

12. A shaft coupling according to one of claims 9 to 11, characterised by x = 1.

## Revendications

1. Accouplement d'arbre (10) élastique, avec des corps d'accouplement (15, 16) élastiques, disposés sur des diamètres différents, concentriquement par rapport à l'axe de système (20) ainsi qu'avec un chevauchement axial,
une partie métallique (19) centrale en forme d'anneau, d'une première moitié d'accouplement, d'une part, étant mise en adhérence par vulcanisation avec les surfaces périphériques (23, 24) intérieures, tournées l'une vers l'autre, des corps d'accouplement, et une partie métallique (17, 18), en forme d'anneau extérieure, de l'autre moitié d'accouplement, d'autre part, étant mise en adhérence par vulcanisation avec les surfaces périphériques (21, 22) extérieures, tournées à l'opposé les unes les autres, des corps d'accouplement, et des tronçons d'accouplement (18a), du genre de bride, de ces deux parties métalliques étant fixés sur un disque annulaire (14), caractérisé en ce que les corps d'accouplement élastiques (15, 16), avec les parties métalliques (17, 18, 19) mises en adhérence sur eux, forment des groupes de construction réalisés en segments d'accouplement (13) en forme de segments de cercles, en ce que les surfaces d'adhérence (21, 22, 23, 24) de toutes les parties métalliques (17, 18, 19) sont orientées parallèlement à l'axe, en ce que le disque annulaire est réalisé sous forme de plaque support pour tous les segments d'accouplement (13) d'un accouplement (10) et sous la forme de bride adaptatrice (14) pour obtenir un raccordement direct de l'accouplement (10) à une partie machine tel qu'un disque de volant moteur (11), et en ce que les parties métalliques (17, 18) placées à l'extérieur sont fixées, avec une compression exclusivement radiale des corps d'accouplement élastiques (15, 16), de façon précontrainte sur une plaque de montage (32), susceptible d'être reliée de façon désolidarisable à la bride adaptatrice (14).

2. Accouplement d'arbre selon la revendication 1, caractérisé en ce que la partie métallique extérieure (18) est mise en adhérence sur la plaque de montage, en particulier par soudage, collage ou rivetage, et la partie métallique intérieure (17) est vissée à la plaque de montage, avec compression des corps d'accouplement élastiques (15, 16).

3. Accouplement d'arbre selon la revendication 1, caractérisé en ce que tant la partie métallique extérieure (18) qu'également la partie métallique intérieure (17) sont vissées, sous compression radiale des corps d'accouplement élastiques (15, 16), à la plaque de montage (32) et celle-ci présente un tronçon de fixation, en saillie au-dessus de la périphérie du vissage, avec des traversées, pour le vissage sur la bride adaptatrice (14).

4. Accouplement d'arbre selon l'une des revendications 1 à 3, caractérisé en ce que les parties métalliques extérieures (17, 18) sont constituées de tôles déformées par flexion/coudage.

5. Accouplement d'arbre selon l'une des revendications 1 à 4, caractérisé en ce que la partie métallique centrale (19) est réalisée en métal léger.

6. Accouplement d'arbre selon la revendication 5, caractérisé en ce que la partie métallique centrale (19) est traversée par des canaux d'aération axiaux (26).

7. Accouplement d'arbre selon l'une des revendications 1 à 6, caractérisé par des segments d'accouplement (13) identiques les uns les autres, qui donnent des accouplements de puissance nominale différente, par le fait d'être prévus en un nombre différent et sous un espacement périphérique (37) différent les uns des autres, lorsque l'agencement est symétrique, par rapport à l'axe de système (20) et concernant l'espacement périphérique (37).

8. Accouplement d'arbre selon la revendication 7, caractérisé par un nombre n déterminé de segments d'accouplement (13) étroitement espacés les uns des autres en direction périphérique, sur un cercle partiel dont le centre coïncide avec l'axe de système (20).

9. Accouplement d'arbre selon la revendication 8, caractérisé par l'agencement d'un nombre n-x, diminué d'au moins un segment d'accouplement (13), de segments d'accouplement qui sont disposés sous un plus grand espacement périphérique (37), sur le même cercle partiel que celui sur lequel le nombre n de segments d'accouplement (13) trouveraient de la place.

10. Accouplement d'arbre selon la revendication 9, caractérisé en ce que les segments d'accouplement (13) en nombre n-x sont disposés de façon décalée chaque fois de la même distance radialement dans la direction de l'axe de système (20), leurs centres de courbures (38), ne coïncidant plus avec l'axe de système (20), étant disposés sur un cercle (39) concentrique à l'axe de symétrie (20).

11. Accouplement d'arbre selon la revendication 8, caractérisé par l'agencement d'un nombre n+x, augmenté d'au moins un segment d'accouplement (13), de segments d'accouplement (13) qui sont disposés sous un faible espacement périphérique (37) les uns par rapport aux autres et avec des centres de courbure (38) décalés radialement vers l'extérieur par rapport à l'arbre de système (20), leurs centres de courbure (38), ne coïncidant plus avec l'axe de système (20), étant disposés sur un cercle (39) concentrique à l'axe de système (20).

12. Accouplement d'arbre selon l'une des revendications 9 à 11, caractérisé par x = 1.
